Europäisches Patentamt

European Patent Office

Office européen des brevets

(19)

(11) **EP 0 967 365 B1**

(12) **EUROPÄISCHE PATENTSCHRIFT**

(45) Veröffentlichungstag und Bekanntmachung des Hinweises auf die Patenterteilung:
**30.07.2003   Patentblatt 2003/31**

(51) Int Cl.[7]: **F01K 23/06**, H02P 9/06

(21) Anmeldenummer: **98810593.8**

(22) Anmeldetag: **26.06.1998**

(54) **Verfahren zum Steuern und Regeln eines Kraftwerkes sowie Kraftwerk zur Durchführung des Verfahrens**

Method for controlling or regulating a power plant and power plant for carrying out this method

Méthode pour contrôler et régler une centrale électrique et centrale électrique pour mise en oeuvre de cette méthode

(84) Benannte Vertragsstaaten:
**DE GB**

(43) Veröffentlichungstag der Anmeldung:
**29.12.1999   Patentblatt 1999/52**

(73) Patentinhaber: **ALSTOM (Switzerland) Ltd**
**5401 Baden (CH)**

(72) Erfinder: **Hepner, Stephan, Dr.**
**5628 Althäusern (CH)**

(56) Entgegenhaltungen:
**EP-A- 0 379 108**      **WO-A-98/27004**
**DE-A- 3 618 745**      **DE-A- 3 731 627**

**Beschreibung**

TECHNISCHES GEBIET

Die vorliegende Erfindung bezieht sich auf das Gebiet der Kraftwerkstechnik. Sie betrifft ein Verfahren zum Steuern und Regeln eines Kraftwerkes, in welchem Kraftwerk in einem Brenner aus einem gasförmigen Brennstoff thermische Leistung erzeugt und die thermische Leistung zumindest teilweise in einer Umwandlungseinrichtung in elektrische Leistung umgewandelt wird, und in welchem Kraftwerk der Brennstoff für den Brenner in einem Brennstofferzeuger aus einem Einsatzprodukt unter Anwendung von thermischer und/oder elektrischer Leistung, welche am Ausgang der Umwandlungseinrichtung entnommen wird, erzeugt und an den Brenner weitergeleitet wird (Siehe Dokument WO-A-98/27004).

Die vorliegende Erfindung bezieht sich weiterhin auf ein Kraftwerk zur Durchführung des Verfahrens.

STAND DER TECHNIK

Angesichts der zunehmend strenger werdenden Umweltschutzgesetzgebung wird es zunehmend schwieriger, Abfallprodukte von Raffinerieprozessen zu entsorgen. Aus diesem Grunde werden Verfahren, die derartige Abfallprodukte in Brennstoffe umwandeln, welche nachfolgend in einem Kraftwerk zur Erzeugung elektrischer und/oder thermischer Energie eingesetzt werden können, profitabel.

Eine typische Anlage für die Umwandlung von Abfallstoffen in elektrische Energie umfasst eine Vergasungsanlage, die den als Raffinerie-Abfall anfallenden Teer in sog. "Syngas", eine brennbare Mischung verschiedener Gase, umwandelt. Das Syngas wird dann in einer Gasturbine verbrannt, welche die thermische Energie der entstehenden Heissgase zumindest teilweise in elektrische Energie umwandelt (Integrated Fuel and Power Generation IFPG). Die Gasturbine ist dabei üblicherweise Teil eines Kombiprozesses (mit Gas- und Dampfturbine), um den Gesamtwirkungsgrad der Umwandlung von Syngas in elektrische Leistung zu erhöhen. Ein Teil der erzeugten Leistung wird (in Form von Dampf und/oder elektrischer Leistung) in die Vergasungsanlage zurückgespeist, um die Erzeugung des Syngases zu bewirken. Es besteht daher eine enge Kopplung zwischen dem Syngaserzeuger (Vergasungsanlage) und dem Syngasverbraucher (Gasturbine bzw. Kraftwerksblock). Insbesondere kann ein stabiler, stationärer Betrieb dieser eng miteinander verflochtenen Anlagenteile nur erreicht werden, wenn Erzeugung und Verbrauch des Syngases miteinander in Einklang stehen. Hierzu muss ein Steuerund Regelungsverfahren entwickelt werden, welches auf die Besonderheiten einer IFPG-Anlage Rücksicht nimmt und sich vom Betrieb eines autonomen Kraftwerks (Standalone Power Plant SAPP), bei dem der Brennstoff aus einem Speicher in Form eines Gas- oder Oeltanks bezogen wird, deutlich unterscheidet.

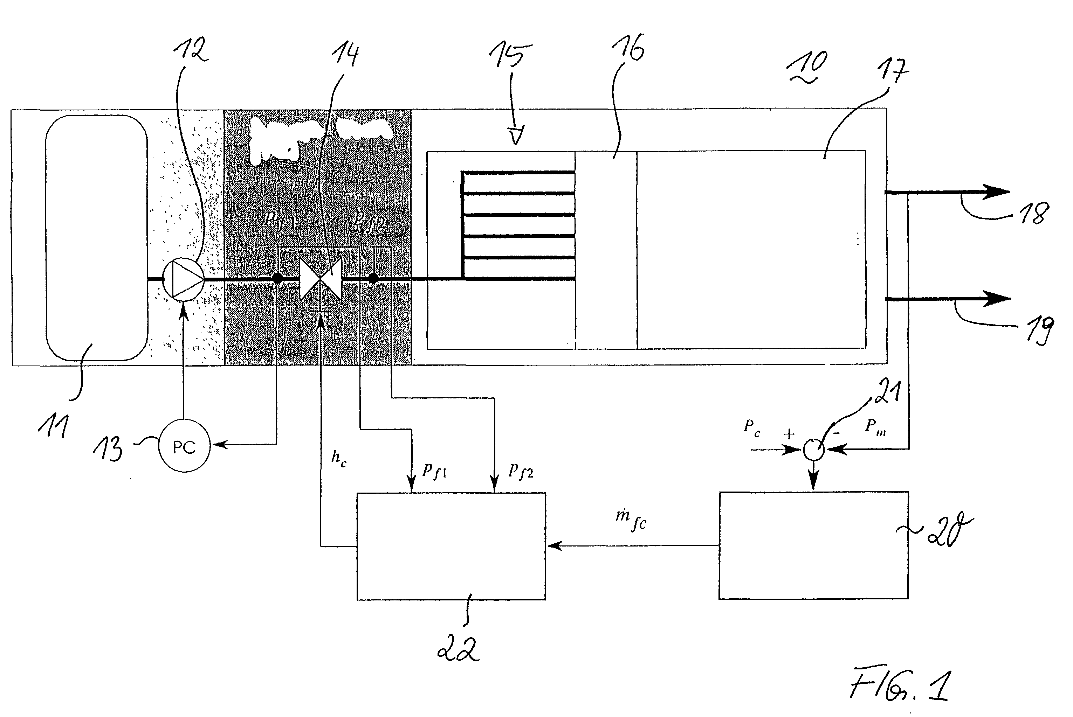

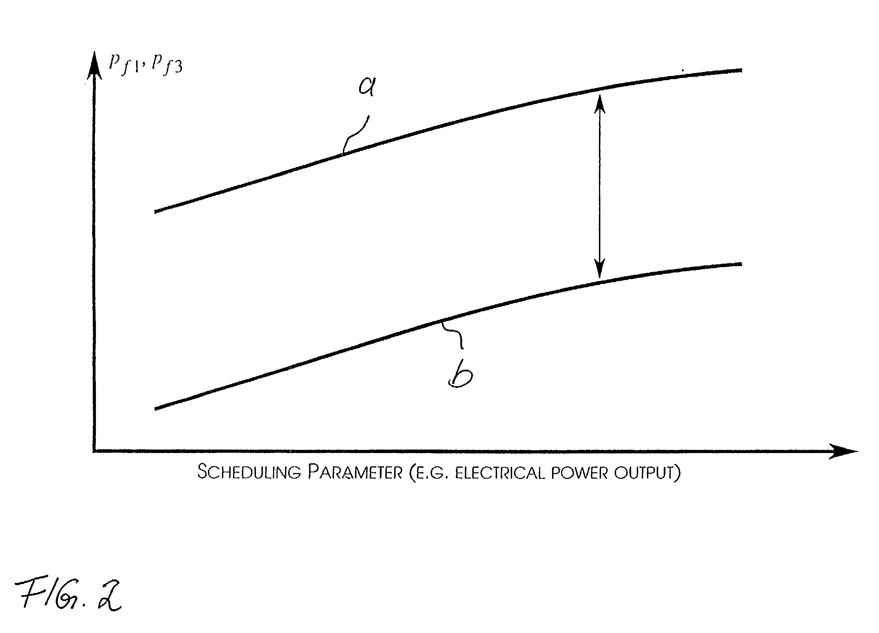

Der typische Aufbau eines Kraftwerkes 10 in Form einer herkömmlichen SAPP-Anlage ist schematisch in Fig. 1 wiedergegeben. Eine Brennstoffversorgungseinrichtung 12 (z.B. eine Pumpe) entnimmt den Brennstoff aus einem Brennstoffspeicher 11 und komprimiert oder dekomprimiert (expandiert) ihn auf einen gewissen vorgegebenen Druck $p_{f1}$. Die Brennstoffzufuhr zur Brennkammer 16 wird gesteuert durch ein Regelventil 14. Ein Brennstoffverteilsystem 15 verteilt den eingespeisten Brennstoffmassenstrom auf einen oder mehrere innerhalb der Brennkammer 16 angeordneten Brenner. Die thermische Leistung der Brennkammer 16 wird dann in einer nachfolgenden Umwandlungseinrichtung 17 (Gasturbine, Abhitzekessel, Dampfturbine) z.B. in einem kombinierten Kreisprozess in elektrische Leistung und/oder Dampf umgewandelt. Die grundlegende Strategie zur Steuerung und Regelung einer solchen Anlage hat zwei Ziele: (a) Die Erzeugung von beliebigen, zeitlich veränderlichen Ausgangsleistungsprofilen innerhalb der Grenzen des Betriebsbereiches der Anlage, und (b) die Sicherstellung der notwendigen Brennstoffversorgung ohne wesentliche Verzögerungen.

Das Ziel (a) wird typischerweise durch eine Leistungs-Regelschleife erreicht, welche den Nachführfehler

$$dP(t) = P_c(t) - P_m(t)$$

im stationären Betrieb auf Null bringt. $P_c(t)$ bezeichnet dabei den sich möglicherweise zeitlich verändernden Sollwert der Leistung, $P_m(t)$ ist gemäss Fig. 1 die gemessene Ausgangsleistung. Ein Ueberblick der SAPP-Anlage mit den hauptsächlichen Regelschleifen ist in Fig. 1 dargestellt.

Ein wesentlicher Bestandteil der Regelung ist der Leistungsregler 20. Der Leistungsregler 20 kann intern weitere Regelschleifen (z.B. Temperaturregler, Druckregler etc.) enthalten, die notwendig sind, um die internen Zustände des Krraftwerkes innerhalb der vorgegebenen Betriebsgrenzen zu halten. Der Leistungsregler kann wahlweise die von der Umwandlungseinrichtung 17 am Ausgang 18 angegebene thermische Leistung (Dampf) oder die am Ausgang 19 abgegebene elektrische Leistung regeln. Eingangsseitig wird der Leistungsregler 20 mit der in einem Subtrahierer 21 gebildeten Differenz zwischen $P_c$ und $P_m$ beaufschlagt.

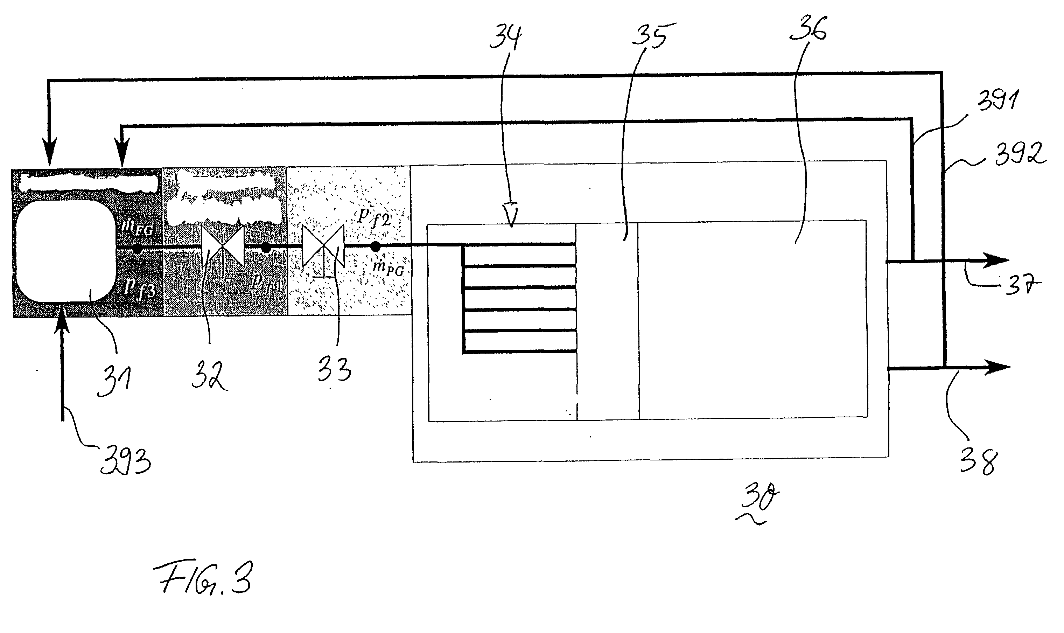

Ausgangsseitig gibt er ein Signal ab, welches dem erforderlichen Brennstoffmassenfluss $\dot{m}_{fc}$ entspricht. Das Ausgangssignal des Leistungsreglers 20 wird in einem nachfolgenden Brennstoff-Ventilstellungs-Wandler 22 in ein Ventilstellungssignal $h_c$ für das Regelventil 14 (oder eine entsprechende Grösse eines anderen Brennstoff-Kontrollorgans wie z.B. die Sollgeschwindigkeit einer Brennstoffpumpe mit variabler Geschwindigkeit) umgewandelt. Der Brennstoffmassenfluss durch das Regelventil 14 hängt ab von den Drücken $p_{f1}$ und $p_{f2}$ vor und nach dem Ventil, deren gemessene Werte zur Berechnung von $h_c$ zusätzlich in den Brennstoff-Ventilstellungs-Wandler 22 eingegeben werden. Für einen Eingangsdruck $p_{f1}$ innerhalb der in Fig. 2 dargestellten Grenzkurven a und b, und innerhalb des der Betriebsgrenzen des Regelventils 14 kann so durch eine geeignete Auswahl des Ventilstellungssignals $h_c$ jeder beliebige Brennstoffmassenfluss nahezu verzögerungsfrei eingestellt werden. Die wesentliche Begrenzung in der Dynamik des Massenflusses ist durch die Dynamik des Regelventils 14 gegeben. Das Ventil muss daher so ausgelegt sein, dass es alle Anforderungen zur Erreichung des o.g. Zieles (a) erfüllt. Zur Erreichung des o.g. Zieles (b) (eine Vorbedingung für das Ziel (a)), muss die Brennstoffversorgungseinrichtung 12 sicherstellen, dass der Eingangsdruck $p_{f1}$ innerhalb der in Fig. 2 dargestellten Grenzkurven a und b gehalten wird. Hierzu ist gemäss Fig. 1 eine Druckregelschleife für $p_{f1}$ vorgesehen, die sich aus der Brennstoffversorgungseinrichtung 12 und einem Druckregler 13 zusammensetzt. Es sei an dieser Stelle angemerkt, dass die Brennstoffversorgungseinrichtung 12 typischerweise eine Brennstoffförderpumpe, ein Gaskompressor oder ein Druckreduzierventil ist.

Gegenüber dem in Fig. 1 gezeigten Aufbau einer SAPP-Anlage zeigt eine IFPG-Anlage, bei welcher der Brennstoff ausschliesslich innerhalb der Anlage selbst erzeugt wird, und die dem Verfahren der vorliegenden Erfindung zugrundeliegt, den in Fig. 3 wiedergegebenen prinzipiellen Aufbau. Eine solches Kraftwerk 30 ist gekennzeichnet durch einen Brennstofferzeuger 31, eine Reduziervorrichtung 32 (in manchen Fällen kann dies auch eine steuerbare Kompressionsvorrichtung sein) und einen Kraftwerksblock, wie er bereits im Zusammenhang mit Fig. 1 beschrieben worden ist, und der ein Regelventil 33, ein Brennstoffverteilsystem 34, eine Brennkammer 35 und eine Umwandlungseinrichtung 36 mit einem Ausgang 37 für thermische Leistung (Dampf) und einem Ausgang 38 für elektrische Leistung umfasst. Die Reduziervorrichtung 32 kann ein steuerbares Druckreduzierventil oder eine andere steuerbare Druckreduziervorrichtung sein. Von den Ausgängen 37 und 38 der Umwandlungseinrichtung 36 (z.B. Gasturbine, Abhitzekessel und Dampfturbine) bringen eine Dampfrückführung 391 und eine Leistungsrückführung 392 für elektrische Leistung die zur Brennstofferzeugung notwendige Energie zum Brennstofferzeuger 31. Ueber die Zuführung 393 wird ein entsprechendes Einsatzprodukt (z.B. Teer) zur Umwandlung in Brennstoff in den Brennstofferzeuger 31 eingespeist.

Die Steuerung und Regelung der IFPG-Anlage nach Fig. 3 unterscheidet sich grundlegend von der Steuerung und Regelung der SAPP-Anlage aus Fig. 1, weil bei der IFPG-Anlage der Brennstofferzeuger 31 so geregelt werden muss, dass er innerhalb der Betriebsgrenzen des Kraftwerkes dem Brennstoffverbrauch der Umwandlungseinrichtung 36 angepasst ist. Die Zielsetzung für die Regelung kann dabei so beschrieben werden, dass eine Regelschleife für die Leistung vorhanden ist, bei der die Erzeugung und der Verbrauch von Brennstoff innerhalb vorgegebener Grenzen aufeinander abgestimmt sind. Die Grenzen können dabei in Form von Betriebsdrücken ausgedrückt werden.

Die wesentlichen und für die Regelung wichtigen Betriebsgrenzen für die Anlage sind die Grenzdrücke für den Druck $p_{f1}$ am Eingang des Regelventils 33 und für den Druck $p_{f3}$ am Ausgang des Brennstofferzeugers 31. Für beide Drücke gelten ebenfalls die in Fig. 2 wiedergegebenen Grenzkurven a und b, welche intrinsische Eigenschaften des Brennstofferzeugers 31 und der Umwandlungseinrichtung 36 darstellen, und welche von verschiedenen Anlagenparametern wie z.B. der erzeugten elektrischen Ausgangsleistung abhängen können. Der Betrieb der Anlage 30 ist nur dann zulässig, wenn sich $p_{f1}$ und $p_{f3}$ innerhalb der entsprechenden Grenzen befinden. Werden diese Grenzen überschritten, müssen für den Brennstofferzeuger 31 und/oder die Umwandlungseinrichtung 36 Notfallmassnahmen ergriffen werden. Es gibt weitere Randbedingungen für den Betrieb von Brennstofferzeuger 31 und Umwandlungseinrichtung 36, die durch interne Regler berücksichtigt werden, auf die im vorliegenden Zusammenhang aber nicht weiter eingegangen zu werden braucht.

Die für eine Anlage gemäss Fig. 3 geeignete Steuerung und Regelung muss die folgenden Ziele erfüllen:

    (1) Sie muss den Druck $p_{f3}$ am Ausgang des Brennstofferzeugers 31 innerhalb vorgegebener Grenzen stabilisieren (Betriebsbedingung für den Brennstofferzeuger).

    (2) Sie muss den Eingangsdruck $p_{f1}$ für das Brennstoffverteilsystem 34 innerhalb vorgegebener Grenzen stabilisieren (Betriebsbedingung für das Brennstoffverteilsystem).

    (3) Sie muss die Brennstofferzeugung und den Brennstoffverbrauch miteinander in Einklang bringen, um für jede beliebige nachgefragte Ausgangsleistung der Umwandlungseinrichtung 36 innerhalb des zulässigen Betriebsbereiches stationäre Arbeitspunkte zu erhalten.

    (4) Sie muss die Transienten des Gesamtsystems inklusive Aufstarten und Herunterfahren beherrschen.

Die grundlegende Schwierigkeit, die den o.g. Zielen gemeinsam ist, ist die Einhaltung des Gleichgewichtes der Brennstoffmassenströme des Brennstoffverbrauchs $\dot{m}_{PG}$ und der Brennstofferzeugung $\dot{m}_{FG}$, nämlich

$$\dot{m}_{PG} = \dot{m}_{FG}.$$

Jede Verletzung dieses Gleichgewichtes hat eine Transiente des Systems zur Folge und resultiert in einer Verletzung der Betriebsbedingungen, wenn nicht entsprechende Gegenmassnahmen ergriffen werden. Beim Abweichen vom Gleichgewicht können zwei Fälle unterschieden werden:

(1) Für $\dot{m}_{PG} > \dot{m}_{FG}$ (Brennstoffverbrauch höher als Brennstofferzeugung) werden ohne korrigierenden Eingriff und bei einer konstanten Brennstofferzeugungsrate die Druckwerte für $p_{f1}$ und $p_{f3}$ abnehmen (da der im Brennstofferzeuger und Brennstoffverteilsystem vorhandene Brennstoffvorrat abnimmt), bis sie den durch die Grenzkurven b in Fig. 2 festgelegten Betriebsbereich nach unten verlassen.

(2) Für $\dot{m}_{pG} < \dot{m}_{FG}$ (Brennstoffverbrauch niedriger als Brennstofferzeugung) werden ohne korrigierenden Eingriff und bei einer konstanten Brennstofferzeugungsrate die Druckwerte für $p_{f1}$ und $p_{f3}$ ansteigen (da sich Brennstoff im Speichervolumen des Brennstofferzeugers und des Brennstoffverteilsystems ansammelt), bis sie die Grenzkurve a in Fig. 2 überschreiten.

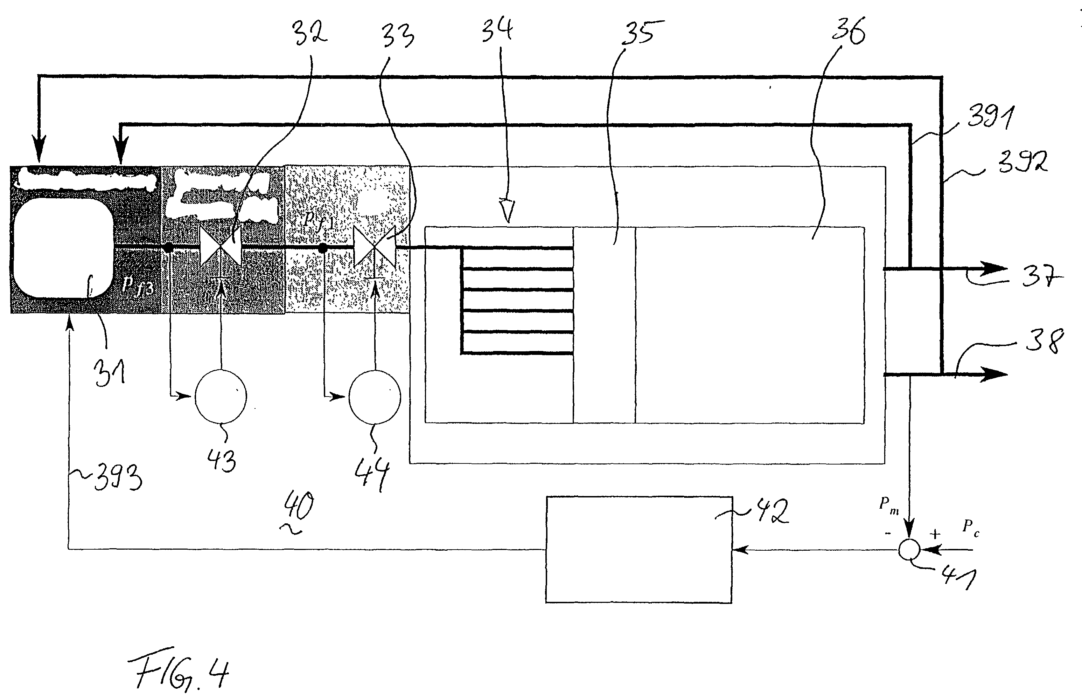

Die bisher verwendete Art der Steuerung und Regelung einer IFPG-Anlage nach Fig. 3 ist im vereinfachten Schema in Fig. 4 wiedergegeben. Das wesentliche Merkmal der Regelungsschleife für ein solches Kraftwerk 40 ist ein Leistungsregler 42, der ausgangsseitig in die Zuführung 393 des Einsatzproduktes für den Brennstofferzeuger 31 eingreift. Hierin unterscheidet sich die Regelung von der Regelung der SAPP-Anlage aus Fig. 1, wo die Ausgangsleistung des Kraftwerkes über das Regelventil 14 geregelt wird. Um die Anlage innerhalb der Betriebsgrenzen zu stabilisieren, werden zusätzlich Druckregler 43 und 44 für die Drücke $p_{f1}$ und $p_{f3}$ benötigt.

Diese bekannte Regelung hat jedoch verschiedene Nachteile:

(1) Es existiert lediglich eine schwache dynamische Korrelation zwischen der Ausgangsleistung und der Zuführung des Einsatzproduktes zum Brennstofferzeuger. Insbesondere kann bei der Brennstofferzeugung die Qualität (der Heizwert) des erzeugten Brennstoffes starken Schwankungen unterworfen sein. Darüber hinaus gibt es eine Vielzahl von weiteren Parametern, welche die Qualität des Brennstoffes beeinflussen. Die Zuführung des Einsatzproduktes stellt daher ein sehr ungenaues Mass für die erzeugte Leistung dar.

(2) Die Dynamik der Brennstofferzeugung (des Brennstofferzeugers 31) ist in der Regel sehr langsam im Vergleich mit der Leistungsdynamik des Kraftwerksblockes bzw. der Umwandlungseinrichtung 36. Der Leistungsregler 42 muss daher an die Dynamik des Brennstofferzeugers 31 angepasst werden, was zu einer kleinen Bandbreite für die Stabilisierung der Ausgangsleistung führt. Dies ist jedoch nicht ausreichend für Anwendungen wie z. B. Frequenzsteuerung ("frequency response"), Inselbetrieb ("island Operation") oder den notfallmässigen Lastabfall ("emergency deloading") des Kraftwerkes entlang vorgegebener Leistungsgradienten.

(3) Kombikraftwerke haben üblicherweise Standard-Blockregelungen, die auf der grundlegenden Schleife aus Fig. 1 aufbauen. Die betroffenen Leistungsgrössen (gemessene Leistung $P_m$, Sollleistung $P_c$) werden dazu verwendet, um die Leistungserzeugung auf verschiedene Leistungserzeugungseinheiten (z.B. eine Mehrzahl von Gasturbinen oder Dampfturbinen) innerhalb des Kraftwerkes zu verteilen, wobei jede der Einheiten durch einen eigenen Leistungsregler gesteuert wird. Das Fehlen einer Leistungsregelungsschleife für das Kraftwerk in der Lösung nach Fig. 4 erfordert demzufolge eine Umstellung des Konzeptes der Standard-Blockregelung. Dies wird deutlich aus der Tatsache, dass das Regelventil 33, welches (als Regelventil 14) in der Lösung nach Fig. 1 als Stellglied für die Ausgangsleistung des Kraftwerkes verwendet wird, in der Lösung nach Fig. 4 nunmehr einer Druckregelschleife zugeordnet ist.

(4) Die Regelungsstruktur nach Fig. 4 trägt auch nicht den wesentlichen Beziehungen zwischen Eingangsgrössen und Ausgangsgrössen Rechnung, die für die Stabilisierung der einzelnen Anlagenteile notwendig sind: Der Druck $p_{f3}$ ist ein wichtiger Parameter für die Dynamik des Brennstofferzeugers 31. Umgekehrt ist die Zufuhr des Einsatzproduktes zum Brennstofferzeuger 31 das hauptsächliche Stellglied für die Stabilisierung von $p_{f3}$. Auf der anderen Seite ist die Ausgangsleistung der hauptsächliche Parameter für die Stabilisierung des Kraftwerkes, wobei die Brennstoffzufuhr zum Kraftwerksblock die hauptsächliche Steuergrösse ist. Es ist offensichtlich, dass die in Fig. 4 gezeigte Reglerstruktur diese Beziehungen nicht berücksichtigt, was zu Problemen in Form dynamischer Instabilitäten führen kann.

DARSTELLUNG DER ERFINDUNG

Es ist daher Aufgabe der Erfindung, ein Verfahren für die Regelung und Steuerung von IFPG-Kraftwerken zu schaffen, welches die Nachteile der bekannten Verfahren vermeidet und insbesondere auf die Besonderheiten dieses Kraftwerktyps Rücksicht nimmt und eine hohe Stabilität im Betrieb bei gleichzeitig grosser Regelungsdynamik gewährleistet.

Die Aufgabe wird bei einem Verfahren der eingangs genannten Art dadurch gelöst, dass die Erzeugung des Brennstoffes im Brennstofferzeuger durch einen ersten Regelkreis, und die Umwandlung des Brennstoffes in elektrische Leistung in der Umwandlungseinrichtung durch einen zweiten Regelkreis stabilisiert werden, und dass das Kraftwerk als Ganzes durch eine Kopplung der beiden Regelkreise in einem vorgegebenen Betriebsbereich gehalten wird. Der Kern der Erfindung besteht darin, für die Anlagenteile der Brennstofferzeugung und der Leistungserzeugung jeweils separate stabilisierende Regelungen vorzusehen, welche auf den Beziehungen der massgeblichen Eingangs- und Ausgangsgrössen des jeweiligen Anlagenteils basieren, und die beiden Regelungen so miteinander zu verknüpfen, dass das Gesamtsystem innerhalb des vorgegebenen Betriebsbereichs gehalten wird, wobei die dynamische Anwort der Brennstofferzeugung im Hinblick auf die Leistungserfordernisse des Kraftwerksblocks maximiert wird.

Eine erste bevorzugte Ausführungsform des Verfahrens nach der Erfindung ist dadurch gekennzeichnet, dass im ersten Regelkreis der Druck ($p_{f3}$) am Ausgang des Brennstofferzeugers gemessen und über einen ersten Druckregler, welcher die Zuführung des Einsatzproduktes zum Brennstofferzeuger steuert, innerhalb eines vorgegebenen Betriebsbereiches gehalten wird, dass im zweiten Regelkreis die Leistung ($P_m$) am Ausgang der Umwandlungseinrichtung gemessen und über einen Leistungsregler, welcher die Zuführung des Brennstoffes zur Umwandlungseinrichtung steuert, auf einem vorgegebenen Leistungs-Sollwert gehalten wird, dass zur Steuerung der Brennstoffzufuhr zur Umwandlungseinrichtung ein Regelventil verwendet wird, dass der Leistungsregler an seinem Ausgang ein Signal abgibt, welches dem erforderlichen Brennstoffmassenfluss entspricht, und dass das Ausgangssignal des Leistungsreglers mittels eines Brennstoff-Ventilstellungs-Wandlers in ein Ventilstellungssignal umgewandelt und zur Betätigung des Regelventils verwendet wird.

Die Kopplung zwischen den einzelnen Regelkreisen erfolgt vorzugsweise dadurch, dass einerseits zur Anpassung von Lastsprüngen an den vom Brennstofferzeuger zur Verfügung gestellten Druck aus einem hinter dem Ausgang des Brennstofferzeugers gemessenen Druck eine Sollwertänderung abgeleitet und mit dem von aussen vorgegebenen Leistungs-Sollwert zu einem neuen Leistungs-Sollwert des zweiten Regelkreises kombiniert wird, und dass andererseits das dem erforderlichen Brennstoffmassenfluss entsprechende Ausgangssignal des Leistungsreglers zur Steuerung der Zuführung des Einsatzproduktes zum Brennstofferzeuger mitverwendet wird. Zur Ableitung der Sollwertänderung wird dabei vorzugsweise entweder der am Ausgang des Brennstofferzeugers gemessene Druck oder der hinter dem Regelventil gemessene Druck verwendet.

Eine Weiterbildung dieser Ausführungsform ist dadurch gekennzeichnet, dass der am Ausgang des Brennstofferzeugers anstehende Druck durch eine zwischen dem Brennstofferzeuger und dem Regelventil angeordnete Reduziervorrichtung auf einen niedrigeren Druck reduziert wird, dass der reduzierte Druck am Ausgang der Reduziervorrichtung gemessen und über einen auf die Reduziervorrichtung wirkenden zweiten Druckregler in einem vorgegebenen Betriebsbereich gehalten wird, dass der gemessene reduzierte Druck zur Ableitung des Ventilstellungssignals mitverwendet wird, und dass der Druck am Ausgang des Regelventils gemessen und zur Ableitung des Ventilstellungssignals mitverwendet wird.

Das erfindungsgemässe Kraftwerk zur Durchführung des Verfahrens umfasst eine Brennkammer, welche eingangsseitig über ein Regelventil an einen Brennstofferzeuger mit einer steuerbaren Zuführung für ein zur Brennstofferzeugung verwendetes Einsatzprodukt, und ausgangsseitig an eine Umwandlungseinrichtung zur zumindest teilweisen Umwandlung der thermischen Leistung in elektrische Leistung angeschlossen ist. Es ist dadurch gekennzeichnet, dass der Brennstofferzeuger zusammen mit einem ersten Druckregler, welcher eingangsseitig an den Ausgang des Brennstofferzeugers angeschlossen ist und ausgangsseitig mit der Zuführung für das Einsatzprodukt in Verbindung steht, einen ersten Regelkreis bildet, dass die Umwandlungseinrichtung zusammen mit einem Leistungsregler, welcher eingangsseitig über einen Subtrahierer für einen Leistungs-Sollwert an den Ausgang der Umwandlungseinrichtung angeschlossen ist und ausgangsseitig mit dem Regelventil in Verbindung steht, einen zweiten Regelkreis bildet, und dass Mittel vorhanden sind, welche die beiden Regelkreise miteinander verkoppeln. Vorzugsweise umfassen die Kopplungsmittel eine Anpassungsschaltung, welche eingangsseitig an den Ausgang des Brennstofferzeugers oder des Regelventils und ausgangsseitig an einen Addierer für den Leistungs-Sollwert angeschlossen ist und jedem Druckwert vom Ausgang des Brennstofferzeugers bzw. Regelventils eine Sollwertänderung für den von aussen vorgegebenen Leistungs-Sollwert zuordnet. Weiterhin umfassen die Kopplungsmittel einen Brennstoff-Einsatzprodukt-Wandler, welcher eingangsseitig an den Ausgang des Leistungsreglers angeschlossen ist und ausgangsseitig über einen Addierer mit der Zuführung für das Einsatzprodukt in Verbindung steht.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    in einer schematisierten Block-Darstellung ein SAPP-Kraftwerk mit zugehöriger Steuerung und Regelung nach dem Stand der Technik;

Fig. 2    die den Betriebsbereich begrenzende obere und untere Grenzkurve für den Brennstoffdruck in einer Anlage nach Fig. 1

Fig. 3 den schematisierten Aufbau einer IFPG-Anlage ohne Steuerung und Regelung;

Fig. 4 die IFPG-Anlage nach Fig. 3 mit einer Steuerung und Regelung nach dem Stand der Technik; und

Fig. 5 die IFPG-Anlage nach Fig. 3 mit einer Steuerung und Regelung gemäss einem bevorzugten Ausführungsbeispiel der Erfindung.

WEGE ZUR AUSFÜHRUNG DER ERFINDUNG

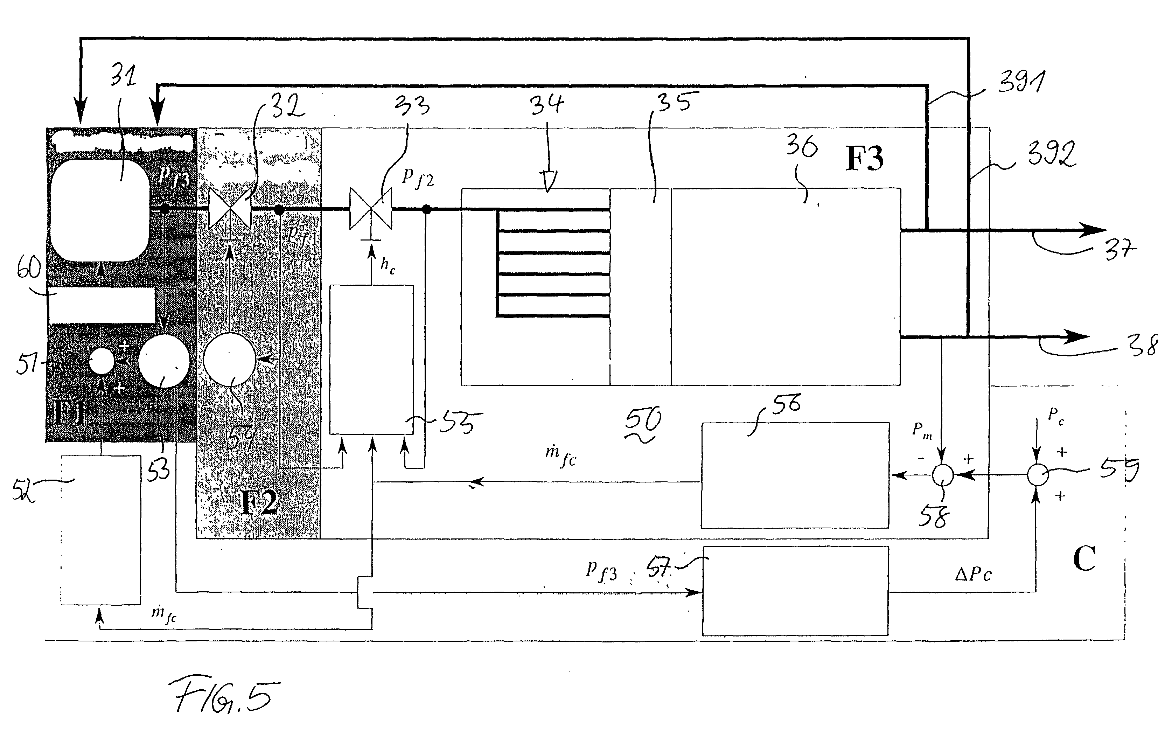

Fig. 5 zeigt in einer schematisierten Block-Darstellung ein bevorzugtes Ausführungsbeispiel eines IFPG-Kraftwerkes mit integrierter Brennstofferzeugung und einer Steuerung und Regelung nach der Erfindung. Das Kraftwerk 50 umfasst als Anlagenteile - wie weiter oben im Zusammenhang mit dem Stand der Technik erläutert - den Brennstofferzeuger 31, der ausgangsseitig über eine Reduziervorrichtung 32 (kann in Einzelfällen auch ein Kompressor sein), ein Regelventil 33 und ein Brennstoffverteilsystem 34 mit einer Brennkammer 35 verbunden ist. Die in der Brennkammer 35 durch einen oder mehrere Brenner erzeugten Heissgase werden in der nachfolgenden Umwandlungseinrichtung 36 in elektrische und/oder thermische Energie (Dampf) umgewandelt, wobei Gasturbinen und/oder Dampfturbinen zum Einsatz kommen. Brennstoffverteilsystem 34, Brennkammer 35 und Umwandlungseinrichtung 36 bilden den eigentlichen Kraftwerksblock des Kraftwerkes 50. Am Ausgang der Umwandlungseinrichtung 36 kann an einem ersten Ausgang 37 thermische Leistung und an einem zweiten Ausgang 38 elektrische Leistung entnommen werden. Ein Teil dieser Leistung wird über eine Dampfrückführung 391 bzw. eine Leistungsrückführung 392 für elektrische Leistung an den Brennstofferzeuger 31 zurückgeführt und dort zur Brennstofferzeugung verwendet. Dem Brennstofferzeuger 31 wird über Zuführung 60 ein Einsatzprodukt ("feedstock"), z.B. Teer aus einer Raffinerie, zugeführt und unter Energieeinsatz in ein brennbares Mischgas umgewandelt.

Die einzelnen Anlagenteile sind gemäss Fig. 5 mit separaten Regelkreisen F1, F2 und F3 ausgerüstet: Der Regelkreis F1 mit einem Druckregler 53 stabilisiert den Druck $p_{f3}$ des Brennstoffes am Ausgang des Brennstofferzeugers 31. Die Stellgrösse ist in diesem Fall die Zufuhr des Einsatzproduktes (Zuführung 60). Die Regelgrösse ist der Druck $p_{f3}$. Der Regelkreis F2 mit dem Druckregler 54 stabilisiert den Druck $p_{f1}$ am Eingang des Regelventils 33. Die Stellgrösse ist die Ventilstellung bzw. Massenstromeinstellung der Reduziervorrichtung 32, die Regelgrösse ist der Druck $p_{f1}$. Der Regelkreis F3 mit dem Leistungsregler 56 dient der Stabilisierung der Ausgangsleistung. Die Stellgrösse ist der Brennstoffmassenstrom in das Brennstoffverteilsystem 34 bzw. die Ventilstellung des Regelventils 33, die Regelgrösse ist die gemessene (thermische und/oder elektrische) Ausgangsleistung $P_m$. Die Kopplung C zwischen den Regelkreisen besteht (a) aus der Eingabe des Sollwertes für den Brennstoffmassenfluss, $\dot{m}_{fc}$, über einen Brennstoff-Einsatzprodukt-Wandler 52 und einen Addierer 51 in die Zuführung 60 für das Einsatzprodukt, wobei die Werte aus dem Druckregler 53 und dem Brennstoff-Einsatzprodukt-Wandler 52 im Addierer 51 addiert werden, und (b) aus einer Rückkopplung des Druckwertes $p_{f3}$ zum Leistungsregler 56 über eine Anpassungsschaltung 57 und einen Addierer 59 als Sollwertänderung $\Delta P_c$, die im Addierer dem Sollwert $P_c$ der Ausgangsleistung hinzugefügt wird und so die Lasttransienten des Kraftwerksblocks an die jeweilige Erzeugungskapazität des Brennstofferzeugers 31 anpasst.

Die in Fig. 5 dargestellte Regelstruktur basiert auf einer klaren Trennung der Funktionalitäten der Anlagenteile Brennstofferzeuger 31 und Umwandlungseinrichtung 36. Die Funktionalität des Brennstofferzeugers 31 ist es, einen vorgegebenen Sollwert $\dot{m}_{fc}$ des Brennstoffmassenstromes bereitzustellen, nicht jedoch eine Ausgangsleistung wie in Fig. 4. Die Funktionalität des Kraftwerksblocks 34, 35 und 36 ist es, einen vorgegebenen Sollwert $P_c$ der Ausgangsleistung zur Verfügung zu stellen. Anders ausgedrückt, ist der Brennstofferzeuger 31 die Quelle eines Brennstoffmassenstromes, während der Kraftwerksblock die Quelle von thermischer und elektrische Leistung ist. Der Brennstofferzeuger 31 wird so durch einen Massenflussregler bestimmt, der über die Regelschleife F1 verwirklicht wird. Die Regelschleifen F2 und F3 sind identisch zu den korrespondierenden Regelschleifen in der SAPP-Anlage der Fig. 1. Die Kopplung C zwischen den Regelschleifen schafft (über die Vorwärtskopplung des Sollwertes $\dot{m}_{fc}$) einerseits ein Instrument, um die Bandbreite der Regelanwort des Brennstofferzeugers 31 an schnelle Laständerungen des Kraftwerksblocks anzupassen. Andererseits schafft sie (unter Verwendung des Druckes $p_{f3}$) eine Beschränkung im Sollwert $P_c$ der Ausgangsleistung, um durch Beschränkung der Lasttransienten des Kraftwerksblocks auf die dynamischen Möglichkeiten des Brennstofferzeugers 31 den Druck $p_{f3}$ in dem durch die Grenzkurven a und b der Fig. 2 vorgegebenen Bereich zu halten.

Die gezeigte Zuordnung der Ein- und Ausgangsgrössen in den Regelschleifen F1, F2 und F3 stellen ein wirkungsvolles und einfaches Mittel dar, um die zugehörigen Regler hinsichtlich der Stabilität der drei Anlagenkomponenten Brennstofferzeuger 31, Reduziereinrichtung 32 und Kraftwerksblock 34, 35, 36 optimal anzupassen. Dies stellt gleichzeitig eine unabdingbare Voraussetzung dar, um die Stabilität des Kraftwerkes 50 insgesamt zu gewährleisten. Es sei darauf hingewiesen, dass im Unterschied zu der herkömmlichen Lösung aus Fig. 4 die neue Lösung gemäss Fig. 5 unempfindlich gegenüber Schwankungen im Brennwert des Brennstoffes ist, weil der Brennwert in dieser Konfiguration lediglich als Schleifenverstärkung der Regelschleife des Kraftwerksblocks auftritt. Dies ist beim herkömmlichen Konzept der Fig. 4 nicht der Fall.

Die Regelschleife F3 wird zur Stabilisierung des Kraftwerksblocks über das Regelventil 33 eingesetzt. Sie kann daher für die Dynamik des Kraftwerksblocks optimiert werden. Da die Dynamik des Kraftwerksblocks viel grösser ist als die Dynamik des Brennstofferzeugers 31, werden die bei der herkömmlichen Lösung gemäss Fig. 4 bestehenden dynamischen Beschränkungen in der Leistungsregelung eliminiert. Die Regelschleifen F2 und F3 mit dem Druckregler 54, dem Leistungsregler 56, und dem Brennstoff-Ventilstellungs-Wandler 55 entsprechen der Regelungsphilosophie bei der SAPP-Anlage gemäss Fig. 1 und erfordern daher keine Aenderung im bisherigen Regelungskonzept des Kraftwerksblocks. Dies ist insbesondere wichtig, weil eine Vielzahl von internen Reglern des Kraftwerksblocks vom Vorhandensein der Regelkreise F2 und F3 abhängig sind.

Insgesamt ergibt sich mit der Erfindung eine Steuerung und Regelung für ein IFPG-Kraftwerk, welches die Nachteile der bisherigen Lösung (Fig. 4) vermeidet. Der benötigte Aufwand beim Realisieren des Regelungskonzeptes ist gering, weil die grundsätzlichen Regelstrukturen im Kraftwerksblock (Regelschleifen F2 und F3) unverändert von den bisherigen Lösungen übernommen werden können. Lediglich die Stabilisierung des Brennstofferzeugers 31 über die Regelschleife F1 und die Kopplung C müssen neu entworfen werden.

BEZUGSZEICHENLISTE

| | |
|---|---|
| 10,30,40,50 | Kraftwerk |
| 11 | Brennstoffspeicher |
| 12 | Brennstoffversorgungseinrichtung |
| 13,43,44 | Druckregler |
| 14,33 | Regelventil |
| 15,34 | Brennstoffverteilsystem |
| 16,35 | Brennkammer |
| 17,36 | Umwandlungseinrichtung (thermisch -> elektrisch) |
| 18,37 | Ausgang (thermische Leistung) |
| 19,38 | Ausgang (elektrische Leistung) |
| 20,42,56 | Leistungsregler |
| 21,41,58 | Subtrahierer |
| 22,55 | Brennstoff-Ventilstellungs-Wandler |
| 31 | Brennstofferzeuger |
| 32 | Reduziervorrichtung |
| 391 | Dampfrückführung |
| 392 | Leistungsrückführung (elektrisch) |
| 393 | Zuführung Einsatzprodukt |
| 51,59 | Addierer |
| 52 | Brennstoff-Einsatzprodukt-Wandler |
| 53,54 | Druckregler |
| 57 | Anpassungsschaltung |
| 60 | Zuführung Einsatzprodukt |
| a,b | Grenzkurve |
| F1,F2, F3 | Regelkreis |
| C | Kopplung (zwischen den Regelkreisen) |

**Patentansprüche**

1. Verfahren zum Steuern und Regeln eines Kraftwerkes (50), in welchem Kraftwerk (50) in einer Brennkammer (35) aus einem gasförmigen Brennstoff thermische Leistung erzeugt und die thermische Leistung zumindest teilweise in einer Umwandlungseinrichtung (36) in elektrische Leistung umgewandelt wird, und in welchem Kraftwerk (50) der Brennstoff für die Brennkammer (35) in einem Brennstofferzeuger (31) aus einem Einsatzprodukt unter Anwendung von thermischer und/oder elektrischer Leistung, welche am Ausgang der Umwandlungseinrichtung (36) entnommen wird, erzeugt und an die Brennkammer (35) weitergeleitet wird, **dadurch gekennzeichnet, dass** die Erzeugung des Brennstoffes im Brennstofferzeuger (31) durch einen ersten Regelkreis (31, 51, 53, 60), und die Umwandlung des Brennstoffes in elektrische Leistung in der Umwandlungseinrichtung (36) durch einen zweiten Regelkreis (36, 33, 55, 56,58) stabilisiert werden, und dass das Kraftwerk (50) als Ganzes durch eine Kopplung der beiden Regelkreise in einem vorgegebenen Betriebsbereich (a, b) gehalten wird.

2. Verfahren nach Anspruch 1, **dadurch gekennzeichnet, dass** im ersten Regelkreis der Druck ($p_{f3}$) am Ausgang des Brennstofferzeugers (31) gemessen und über einen ersten Druckregler (53), welcher die Zuführung (60) des Einsatzproduktes zum Brennstofferzeuger (31) steuert, konstant gehalten wird, und dass im zweiten Regelkreis die Leistung ($P_m$) am Ausgang der Umwandlungseinrichtung (36) gemessen und über einen Leistungsregler (56), welcher die Zuführung des Brennstoffes zur Umwandlungseinrichtung (36) steuert, auf einem vorgegebenen Leistungs-Sollwert ($P_c$) gehalten wird.

3. Verfahren nach Anspruch 2, **dadurch gekennzeichnet, dass** zur Steuerung der Brennstoffzufuhr zur Umwandlungseinrichtung (36) ein Regelventil (33) verwendet wird, dass der Leistungsregler (56) an seinem Ausgang ein Signal abgibt, welches dem erforderlichen Brennstoffmassenfluss ($\dot{m}_{fc}$) entspricht, und dass das Ausgangssignal des Leistungsreglers (56) mittels eines Brennstoff-Ventilstellungs-Wandlers (55) in ein Ventilstellungssignal ($h_c$) umgewandelt und zur Betätigung des Regelventils (33) verwendet wird.

**4.** Verfahren nach Anspruch 3, **dadurch gekennzeichnet, dass** innerhalb der Kopplung der beiden Regelkreise einerseits zur Anpassung von Laständerungen an den vom Brennstofferzeuger (31) zur Verfügung gestellten Druck aus einem hinter dem Ausgang des Brennstofferzeugers (31) gemessenen Druck ($p_{f2}$, $p_{f3}$) eine Sollwertänderung ($\Delta P$) abgeleitet und mit dem von aussen vorgegebenen Leistungs-Sollwert ($P_c$) zu einem neuen Leistungs-Sollwert des zweiten Regelkreises kombiniert wird, und dass andererseits das dem erforderlichen Brennstoffmassenfluss ($\dot{m}_{fc}$) entsprechende Ausgangssignal des Leistungsreglers (56) zur Steuerung der Zuführung (60) des Einsatzproduktes zum Brennstofferzeuger (31) mitverwendet wird.

**5.** Verfahren nach Anspruch 4, **dadurch gekennzeichnet, dass** zur Ableitung der Sollwertänderung ($\Delta P$) der am Ausgang des Brennstofferzeugers (31) gemessene Druck ($p_{f3}$) verwendet wird.

**6.** Verfahren nach Anspruch 4, **dadurch gekennzeichnet, dass** zur Ableitung der Sollwertänderung ($\Delta P$) der hinter dem Regelventil (33) gemessene Druck ($p_{f2}$) verwendet wird.

**7.** Verfahren nach einem der Ansprüche 3 bis 6, **dadurch gekennzeichnet, dass** der am Ausgang des Brennstofferzeugers (31) anstehende Druck ($p_{f3}$) durch eine zwischen dem Brennstofferzeuger (31) und dem Regelventil (33) angeordnete Reduziervorrichtung (32) auf einen niedrigeren Druck ($p_{f1}$) reduziert wird, dass der reduzierte Druck ($p_{f1}$) am Ausgang der Reduziervorrichtung (32) gemessen und über einen auf die Reduziervorrichtung (32) wirkenden zweiten Druckregler (54) in einem vorgegebenen Betriebsbereich gehalten wird, und dass der gemessene reduzierte Druck ($p_{f1}$) zur Ableitung des Ventilstellungssignals ($h_c$) mitverwendet wird.

**8.** Verfahren nach einem der Ansprüche 3 bis 7, **dadurch gekennzeichnet, dass** der Druck ($p_{f2}$) am Ausgang des Regelventils (33) gemessen und zur Ableitung des Ventilstellungssignals ($h_c$) mitverwendet wird.

**9.** Verfahren nach einem der Ansprüche 1 bis 8, **dadurch gekennzeichnet, dass** die Umwandlungseinrichtung (36) wenigstens eine Gasturbine und/oder wenigstens eine Dampfturbine umfasst, und dass zur Erzeugung des Brennstoffes Dampf und/oder elektrische Leistung und/oder Kompressorluft aus der Gasturbine vom Ausgang der Umwandlungseinrichtung (36) an den Brennstofferzeuger (31 zurückgeleitet wird.

**10.** Kraftwerk (50) zur Durchführung des Verfahrens nach Anspruch 1, umfassend eine Brennkammer (35), welche eingangsseitig über ein Regelventil (33) an einem Brennstofferzeuger (31) mit einer steuerbaren Zuführung (60) für ein zur Brennstofferzeugung verwendetes Einsatzprodukt, und ausgangsseitig an eine Umwandlungseinrichtung (36) zur zumindest teilweisen Umwandlung der thermischen Leistung in elektrische Leistung angeschlossen ist, **dadurch gekennzeichnet, dass** der Brennstofferzeuger (31) zusammen mit einem ersten Druckregler (53), welcher eingangsseitig an den Ausgang des Brennstofferzeugers (31) angeschlossen ist und ausgangsseitig mit der Zuführung (60) für das Einsatzprodukt in Verbindung steht, einen ersten Regelkreis bildet, dass die Umwandlungseinrichtung (36) zusammen mit einem Leistungsregler (56), welcher eingangsseitig über einen Subtrahierer (58) für einen Leistungs-Sollwert an den Ausgang der Umwandlungseinrichtung (36) angeschlossen ist und ausgangsseitig mit dem Regelventil (33) in Verbindung steht, einen zweiten Regelkreis bildet, und dass Mittel (51, 52, 57, 59) vorhanden sind, welche die beiden Regelkreise miteinander verkoppeln.

**11.** Kraftwerk nach Anspruch 10, **dadurch gekennzeichnet, dass** die Kopplungsmittel eine Anpassungsschaltung (57) umfassen, welche eingangsseitig an den Ausgang des Brennstofferzeugers (31) oder an den Ausgang des regelventils (33) und ausgangsseitig an einen Addierer (59) für den Leistungs-Sollwert ($P_c$) angeschlossen ist und jedem Druckwert ($p_{f3}$ bzw. $p_{f2}$) vom Ausgang des Brennstofferzeugers (31) bzw. des Regelventils (33) eine Sollwertänderung ($\Delta P$) für den von aussen vorgegebenen Leistungs-Sollwert ($P_c$) zuordnet, und dass die Kopplungsmittel weiterhin einen Brennstoff-Einsatzprodukt-Wandler (52) umfassen, welcher eingangsseitig an den Ausgang des Leistungsreglers (56) angeschlossen ist und ausgangsseitig über einen Addierer (51) mit der Zuführung (60) für das Einsatzprodukt in Verbindung steht.

**12.** Kraftwerk nach Anspruch 11, **dadurch gekennzeichnet, dass** zwischen dem Brennstofferzeuger (31) und dem Regelventil (33) eine Reduziereinrichtung (32) zur Reduzierung des Druckes angeordnet ist, dass die Reduziereinrichtung (32) zusammen mit einem zweiten Druckregler (54), der eingangsseitig an den Ausgang der Reduziereinrichtung (32) angeschlossen ist, und ausgangsseitig die Reduziereinrichtung (32) steuert, einen Regelkreis bildet, und dass Mittel (55) vorgesehen sind, welche die Ventilstellung des Regelventils (33) in Abhängigkeit vom Druckwert ($p_{f1}$) am Ausgang der Reduziereinrichtung (32) steuern.

**13.** Kraftwerk nach einem der Anspruch 11, **dadurch gekennzeichnet, dass** zwischen dem Brennstofferzeuger (31) und dem Regelventil (33) ein Gaskompressor zur Erhöhung des Druckes angeordnet ist, dass der Gaskompressor zusammen mit einem zweiten Druckregler (54), der eingangsseitig an den Ausgang des Gaskompressors angeschlossen ist, und ausgangsseitig den Gaskompressor steuert, einen Regelkreis bildet, und dass Mittel (55) vorgesehen sind, welche die Ventilstellung des Regelventils (33) in Abhängigkeit vom Druckwert ($p_{f1}$) am Ausgang des Gaskompressors steuern.

**14.** Kraftwerk einem der Ansprüche 12 und 13, **dadurch gekennzeichnet, dass** die Mittel zur Steuerung des Regelventils (33) einen Brennstoff-Ventilstellungs-Wandler (55) umfassen, welcher ausgangsseitig auf das Regelventil (33) wirkt und drei Eingänge aufweist, dass auf den einen Eingang der Druckwert ($p_{f1}$) vom Ausgang der Reduziereinrichtung (32) bzw. des Gaskompressors gegeben wird, dass der zweite Eingang mit dem Ausgang des Leistungsreglers (56) verbunden ist, und dass auf den dritten Eingang der Druckwert ($p_{f2}$) vom Ausgang des Regelventils (33) gegeben wird.

**Claims**

**1.** Method of controlling and regulating a power plant (50), in which power plant (50) thermal power is generated in a combustion chamber (35) from a gaseous fuel and the thermal power is at least partially converted into electrical power in conversion equipment (36), and in which power plant (50) the fuel for the combustion chamber (35) is produced in a fuel producer (31) from a feed product with the application of thermal and/or electrical power, which is removed at the outlet from the conversion equipment (36), and the said fuel is passed on to the combustion chamber (35), **characterized in that** the production of the fuel in the fuel producer (31) is stabilized by a first control loop (31, 51, 53, 60), and the conversion of the fuel into electrical power in the conversion equipment (36) is stabilized by a second control loop (36, 33, 55, 56, 58), and **in that** the power plant (50) as a whole is kept within a predefined operating range (a, b) by coupling the two control loops.

**2.** Method according to Claim 1, **characterized in that** in the first control loop the pressure ($p_{f3}$) at the outlet from the fuel producer (31) is measured and is kept constant by a first pressure regulator (53), which controls the supply (60) of the feed product to the fuel producer (31), and **in that** in the second control loop the power ($P_m$) at the outlet of the conversion equipment (36) is measured and is kept at a predefined power set point ($P_c$) by a power controller (56), which controls the supply of the fuel to the conversion equipment (36).

**3.** Method according to Claim 2, **characterized in that** in order to control the fuel supply to the conversion equipment (36), a control valve (33) is used, **in that** the power controller (56) outputs a signal which corresponds to the required fuel mass flow ($\dot{m}_{fc}$), and **in that** the output signal from the power controller (56) is converted by means of a fuel/valve position converter (55) into a valve position signal ($h_c$) and used to operate the control valve (33).

**4.** Method according to Claim 3, **characterized in that** within the coupling of the two control loops, on the one hand, to adapt load changes to the pressure provided by the fuel producer (31), a set point change ($\Delta P$) is derived from a pressure ($p_{f2}$, $p_{f3}$) measured downstream of the outlet of the fuel producer (31) and is combined with the externally predefined power set point ($P_c$) to form a new power set point for the second control loop, and **in that**, on the other hand, the power controller (56) output signal corresponding to the required fuel mass flow ($\dot{m}_{fc}$) is simultaneously used to control the supply (60) of the feed product to the fuel producer (31).

**5.** Method according to the invention Claim 4, **characterized in that**, in order to derive the set point change ($\Delta P$), use is made of the pressure ($p_{f3}$) measured at the outlet of the fuel producer (31).

**6.** Method according to Claim 4, **characterized in that**, in order to derive the set point change ($\Delta P$), use is made of the pressure ($p_{f2}$) measured downstream of the control valve (33).

**7.** Method according to one of Claims 3 to 6, **characterized in that** the pressure ($p_{f3}$) that is present at the outlet from the fuel producer (31) is reduced to a lower pressure ($p_{f1}$) by a reducing device (32) arranged between the fuel producer (31) and the control valve (33), **in that** the reduced pressure ($p_{f1}$) at the outlet from the reducing device (32) is measured and is kept within a predefined operating range by a second pressure regulator (54), which acts on the reducing device (32), and **in that** the measured reduced pressure ($p_{f1}$) is simultaneously used to derive the valve position signal ($h_c$).

**8.** Method according to one of Claims 3 to 7, **characterized in that** the pressure ($p_{f2}$) at the outlet of the control valve (33) is measured and simultaneously used to derive the valve position signal ($h_c$).

**9.** Method according to one of Claims 1 to 8, **characterized in that** the conversion equipment (36) comprises at least one gas turbine and/or at least one steam turbine, and **in that**, in order to produce the fuel, steam and/or electrical power and/or compressor air from the gas turbine is fed back from the outlet of the conversion equipment (36) to the fuel producer (31).

10. Power plant (50) for implementing the method according to Claim 1, comprising a combustion chamber (35), whose inlet is connected via a control valve (33) to a fuel producer (31) having a controllable supply (60) for a feed product used for fuel production, and whose outlet is connected to conversion equipment (36) for the at least partial conversion of the thermal power into electrical power, **characterized in that** the fuel producer (31), together with a first pressure regulator (53), whose input is connected to the outlet of the fuel producer (31) and whose output is connected to the supply (60) for the feed product, forms a first control loop, **in that** the conversion equipment (36), together with a power controller (56), whose input is connected via a subtracter (58) for a power set point to the output of the conversion equipment (36) and whose output is connected to the control valve (33), forms a second control loop, and **in that** there are means (51, 52, 57, 59) which couple the two control loops to each other.

11. Power plant according to Claim 10, according to the coupling means comprise an adaptation circuit (57), whose input is connected to the output of the fuel producer (31) or to the outlet of the control valve (33), and whose output is connected to an adder (59) for the power set point ($P_c$), and which allocates a set point change ($\Delta P$) for the externally predefined power set point ($P_c$) to each pressure value ($p_{f3}$ and $p_{f2}$) from the outlet of the fuel producer (31) and the control valve (33), respectively, and in that the coupling means further comprise a fuel/feed product converter (52), whose input is connected to the output of the power controller (56) and whose output is connected via an adder (51) to the supply (60) for the feed product.

12. Power plant according to Claim 11, **characterized in that** a reducing device (32) is arranged between the fuel producer (31) and the control valve (33) in order to reduce the pressure, **in that** the reducing device (32), together with a second pressure regulator (54), whose input is connected to the output of the reducing device (32) and whose output controls the reducing device (32), forms a control loop, and wherein means (55) are provided which control the valve position of the control valve (33) as a function of the pressure value ($p_{f1}$) at the outlet of the reducing device (32).

13. Power plant according to one of [sic] Claim 11, **characterized in that** a gas compressor is arranged between the fuel producer (31) and the control valve (33) in order to increase the pressure, **in that** the gas compressor, together with a second pressure regulator (54), whose input is connected to the outlet of the gas compressor and whose output controls the gas compressor, forms a control loop, and **in that** means (55) are provided which control the valve position of the control valve (33) as a function of the pressure value ($p_{f1}$) at the outlet of the gas compressor.

14. Power plant [lacuna] **characterized in that** either of Claims 12 and 13, wherein the means for controlling the control valve (33) comprise a fuel/valve position converter (55), whose output acts on the control valve (33) and which has three inputs, **in that** the pressure value ($p_{f1}$) from the outlet of the reducing device (32) or of the gas compressor is applied to one input, **in that** the second input is connected to the output of the power controller (56), and **in that** the pressure value ($p_{f2}$) from the outlet of the control valve (33) is applied to the third input.

## Revendications

1. Procédé pour contrôler et réguler une centrale électrique (50), dans laquelle centrale électrique (50) de la puissance thermique est engendrée dans une chambre de combustion (35) à partir d'un combustible gazeux et la puissance thermique est partiellement transformée dans un dispositif de conversion (36) en puissance électrique, et dans laquelle centrale électrique (50) le combustible pour la chambre de combustion (35) est produit dans un générateur de combustible (31) à partir d'une charge de départ en utilisant de la puissance thermique et/ou électrique, qui est prélevée à la sortie du dispositif de conversion (36), et est reconduit à la chambre de combustion (35), **caractérisé en ce que** la génération du combustible dans le générateur de combustible (31) est stabilisée par un premier circuit de régulation (31, 51, 53, 60) et la conversion du combustible en puissance électrique dans le dispositif de conversion (36) est stabilisée par un deuxième circuit de régulation (36, 33, 55, 56, 58), et **en ce que** la centrale électrique (50) est maintenue en tant qu'unité dans une plage de fonctionnement prédéfinie (a, b) par un accouplement des deux circuits de régulation.

2. Procédé selon la revendication 1, **caractérisé en ce que** dans le premier circuit de régulation, on mesure la pression ($p_{f3}$) à la sortie du générateur de combustible (31) et on la maintient constante par le biais d'un premier régulateur de pression (53), qui contrôle l'apport (60) de charge de départ au générateur de combustible (31), et **en ce que** dans le deuxième circuit de régulation, on mesure la puissance ($P_m$) à la sortie du dispositif de conversion (36) et on la maintient à une valeur de consigne de puissance prédéterminée ($P_c$) par le biais d'un régulateur de puissance (56) qui contrôle l'apport de combustible au dispositif de conversion (36).

3. Procédé selon la revendication 2, **caractérisé en ce que** pour le contrôle de l'apport de combustible au dispositif de conversion (36), on utilise une soupape de régulation (33), **en ce que** le régulateur de puissance (56) délivre à sa sortie un signal qui correspond au flux massique de combustible nécessaire ($\dot{m}_{fc}$) et **en ce que** le signal de sortie du régulateur de puissance (56) est converti au moyen d'un convertisseur de position de soupape de combustible (55) en un signal de position de soupape ($h_c$) et est utilisé pour l'actionnement de la soupape de régulation (33).

4. Procédé selon la revendication 3, **caractérisé en ce qu'**à l'intérieur de l'accouplement des deux circuits de régulation d'une part pour l'adaptation des variations de charge à la pression fournie par le générateur de combustible (31) on dérive, à partir d'une pression ($p_{f2}$, $P_{f3}$) mesurée derrière la sortie du générateur de combustible (31), une variation de la valeur de consigne ($\Delta P$) et on la combine avec la valeur de consigne de puissance prédéfinie de l'extérieur ($P_c$) pour donner une nouvelle valeur de consigne de puissance du deuxième circuit de régulation, et **en ce que** d'autre part, le signal de sortie du régulateur de puissance (56) correspondant au flux massique de combustible ($\dot{m}_{fc}$) est utilisée conjointement pour le contrôle de l'apport (60) de charge de départ au générateur de combustible (31).

5. Procédé selon la revendication 4, **caractérisé en ce que** pour dériver la variation de la valeur de consigne ($\Delta P$), on utilise la pression ($p_{f3}$) mesurée à la sortie du générateur de combustible (31).

6. Procédé selon la revendication 4, **caractérisé en ce que** pour dériver la variation de la valeur de consigne ($\Delta P$), on utilise la pression ($p_{f2}$) mesurée derrière la soupape de régulation (33).

7. Procédé selon l'une quelconque des revendications 3 à 6, **caractérisé en ce que** la pression ($p_{f3}$) existant à la sortie du générateur de combustible (31) est réduite à une pression plus faible ($p_{f1}$) par un dispositif de réduction (32) disposé entre le générateur de combustible (31) et la soupape de régulation (33), **en ce que** la pression réduite ($p_{f1}$) est mesurée à la sortie du dispositif de réduction (32) et est maintenue dans une plage fonctionnelle prédéfinie par le biais d'un deuxième régulateur de pression (54) agissant sur le dispositif de réduction (32), et **en ce que** la pression réduite mesurée ($p_{f1}$) est utilisée conjointement pour dériver le signal de position de soupape ($h_c$).

8. Procédé selon l'une quelconque des revendications 3 à 7, **caractérisé en ce que** la pression ($p_{f2}$) est mesurée à la sortie de la soupape de régulation (33) et est utilisée conjointement pour dériver le signal de position de soupape ($h_c$).

9. Procédé selon l'une quelconque des revendications 1 à 8, **caractérisé en ce que** le dispositif de conversion (36) comprend au moins une turbine à gaz et/ou au moins une turbine à vapeur, et **en ce que** pour la génération du combustible, on reconduit la vapeur et/ou la puissance électrique et/ou l'air du compresseur provenant de la turbine à gaze depuis la sortie du dispositif de conversion (36) jusqu'au générateur de combustible (31).

10. Centrale électrique (50) pour mettre en oeuvre le procédé selon la revendication 1, comprenant une chambre de combustion (35), qui est raccordée du côté de l'entrée par le biais d'une soupape de régulation (33) à un générateur de combustible (31) avec un apport contrôlable (60) pour une charge de départ utilisée pour la génération de combustible, et du côté de la sortie à un dispositif de conversion (36) pour la conversion au moins partielle de la puissance thermique en puissance électrique, **caractérisée en ce que** le générateur de combustible (31), conjointement avec un premier régulateur de pression (53), qui est connecté du côté de l'entrée à la sortie du générateur de combustible (31) et qui communique du côté de la sortie avec l'apport (60) pour la charge de départ, forme un circuit de régulation, **en ce que** le dispositif de conversion (36) conjointement avec un régulateur de puissance (56), qui est raccordé du côté de l'entrée par le biais d'un soustracteur (58) pour une valeur de consigne de puissance à la sortie du dispositif de conversion (36) et qui communique du côté de la sortie, avec la soupape de régulation (33), forme un deuxième circuit de régulation, et **en ce que** des moyens (51, 52, 57, 59) sont prévus pour accoupler l'un à l'autre les deux circuits de régulation.

11. Centrale électrique selon la revendication 10, **caractérisée en ce que** les moyens d'accouplement comprennent un circuit d'adaptation (57) qui est raccordé du côté de l'entrée à la sortie du générateur de combustible (31) ou à la sortie de la soupape de régulation (33) et du côté de la sortie à un additionneur (59) pour la valeur de consigne de la puissance ($P_c$) et associe à chaque valeur de pression ($p_{f3}$ ou $p_{f2}$) de la sortie du générateur de combustible (31) ou de la soupape de régulation (33) une variation de valeur de consigne ($\Delta$P) pour la valeur de consigne de la puissance ($P_c$) prédéterminée de l'extérieur, et **en ce que** les moyens d'accouplement comprennent en outre un convertisseur combustible-charge de départ (52) qui est raccordé du côté de l'entrée à la sortie du régulateur de puissance (56) et qui communique du côté de la sortie par le biais d'un additionneur (51) avec l'apport (60) pour la charge de départ.

12. Centrale électrique selon la revendication 11, **caractérisée en ce qu'**un dispositif de réduction (32) est prévu pour la réduction de la pression entre le générateur de combustible (31) et la soupape de régulation (33), **en ce que** le dispositif de réduction (32) forme un circuit de régulation conjointement avec un deuxième régulateur de pression (54) qui est raccordé du côté de l'entrée à la sortie du dispositif de réduction (32) et qui contrôle, du côté de la sortie, le dispositif de réduction (32), et **en ce qu'**il est prévu des moyens (55) qui contrôlent la position de soupape de la soupape de régulation (33) en fonction de la valeur de pression ($p_{f1}$) à la sortie du dispositif de réduction (32).

13. Centrale électrique selon la revendication 11, **caractérisée en ce qu'**un compresseur à gaz est prévu entre le générateur de combustible (31) et la soupape de régulation (33) pour augmenter la pression, **en ce que** le compresseur à gaz forme un circuit de régulation conjointement avec un deuxième régulateur de pression (54) qui est raccordé du côté de l'entrée à la sortie du compresseur à gaz et qui contrôle le compresseur à gaz du côté de la sortie, et **en ce qu'**il est prévu des moyens (55) qui contrôlent la position de soupape de la soupape de régulation (33) en fonction de la valeur de pression ($p_{f1}$) à la sortie du compresseur à gaz.

14. Centrale électrique selon l'une quelconque des revendications 12 et 13, **caractérisée en ce que** les moyens pour le contrôle de la soupape de régulation (33) comprennent un convertisseur de position de soupape de combustible (55), qui agit du côté de la sortie sur la soupape de régulation (33) et qui présente trois entrées, **en ce que** la valeur de la pression ($p_{f1}$) de la sortie du dispositif de réduction (32) ou du compresseur à gaz est fournie sur la première entrée, **en ce que** la deuxième entrée est connectée à la sortie du régulateur de puissance (56) et **en ce que** la valeur de la pression ($p_{f2}$) de la sortie de la soupape de régulation (33) est fournie sur la troisième entrée.

$FIG. 1$

EP 0 967 365 B1

$p_{f1}, p_{f3}$

$a$

$b$

SCHEDULING PARAMETER (E.G. ELECTRICAL POWER OUTPUT)

FIG. 2

EP 0 967 365 B1

34    35    36

391

392

$m_{EG}$

$p_{f2}$

$p_{f3}$    $p_{f1}$

$m_{PG}$

37

38

393    31    32    33

30

FIG. 3

EP 0 967 365 B1

32  33  34  35  36

391

392

$P_{f1}$

$P_{f3}$

37

38

31

43

44

393

40

42

41

$P_m$  −  +  $P_c$

FIG.4

FIG.5